(19) Europäisches Patentamt
European Patent Office
Office européen des brevets

(11) Publication number : 0 233 079 B1

# (12) EUROPEAN PATENT SPECIFICATION

(45) Date of publication of patent specification : 11.09.91 Bulletin 91/37

(51) Int. Cl.$^5$ : F02B 37/00, F02B 41/10, B60K 6/00, B60T 1/10, F02B 37/14

(21) Application number : 87301148.0

(22) Date of filing : 10.02.87

## (54) Apparatus for recovering thermal energy from an engine.

(30) Priority : 10.02.86 JP 27379/86

(43) Date of publication of application : 19.08.87 Bulletin 87/34

(45) Publication of the grant of the patent : 11.09.91 Bulletin 91/37

(84) Designated Contracting States : DE FR GB

(56) References cited :
EP-A- 0 141 634
EP-A- 0 178 270
EP-A- 0 223 419
CH-A- 192 652
DE-C- 1 040 839

(56) References cited :
JP-A-60 233 938
PATENT ABSTRACTS OF JAPAN, vol. 9, no. 297 (M-432)[2020], 25th November 1985; & JP - A - 60 135 616 (TOYO DENKI SEIZO K.K.) 19-07-1985

(73) Proprietor : Isuzu Motors Limited
6-22-10 Minamiooi Shinagawa-ku
Tokyo 140 (JP)

(72) Inventor : Kawamura, Hideo
3129-13, Okada Samukawa-machi
Kouza-gun Kanagawa (JP)

(74) Representative : Brunner, Michael John et al
GILL JENNINGS & EVERY 53-64 Chancery Lane
London WC2A 1HN (GB)

EP 0 233 079 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to an apparatus for recovering thermal energy from an engine which is operated by burning fuel, and more particularly to such a thermal energy recovery apparatus for recovering exhaust energy of an engine.

There have been developed in recent years thermally insulated engines having various components made of a thermally insulating material such as ceramics, including an outer wall of an exhaust manifold, a cylinder liner, an insulating plate for a cylinder head, and a piston, for example. In such thermally insulated engines, it is not necessary to cool the engine by radiating the heat generated inside the engine, but the energy of a high-temperature exhaust gas discharged by the engine is recovered and fed back to the output shaft of the engine for increasing the output power from the engine.

There has been proposed a so-called turbo compound engine as an exhaust energy recovery apparatus. According to the turbo compound engine, a turbocharger is operated by the exhaust energy from an engine to supercharge the engine, and an exhaust turbine is driven by an exhaust gas having residual energy which is discharged from the turbocharger. Rotative power from the exhaust turbine is fed back to the output shaft of the engine.

The turbo compound engine of the type described above however requires a speed reducer having a large speed reduction ratio in order to allow the rotational speed of the exhaust turbine that is rotated at high speed by the exhaust energy to match the rotational speed of the engine. Therefore, the exhaust energy recovering apparatus is large in size, and does not meet a desired power transmission efficiency.

To solve the problems of the above turbo compound engine, the inventor has proposed an exhaust energy recovery apparatus as disclosed in Japanese Patent Application No. 60-233938. The proposed exhaust energy recovery apparatus includes a generator driven by a turbine disposed in an exhaust pipe, another generator driven by another turbine disposed at the exhaust outlet of the first turbine, and a motor coupled to the drive shaft of a motor vehicle. The two generators are controlled according to the operating condition of the motor vehicle, for driving the motor to give assistive running power to the motor vehicle.

However, the above proposed energy recovery apparatus is problematic in that it fails to recover exhaust energy in a wide range of engine operating conditions since where exhaust energy is recovered according to the depth to which an accelerator pedal is depressed, it is recovered dependent on the ratio between an engine intake pressure and a boost pressure.

It is an object of the present invention to provide an apparatus for recovering thermal energy from an engine, the apparatus including a first rotary machine coupled to a turbocharger mounted on the engine, a second rotary machine coupled to an exhaust turbine disposed in an exhaust system of the engine, and a third rotary machine coupled to an axle of a motor vehicle, the arrangement being such that exhaust energy of the engine is converted by the first and second rotary machines to electric energy which is employed to drive the third rotary machine, thereby recovering the exhaust energy.

Another object of the present invention is to provide a thermal energy recovery apparatus of the type described, wherein when the engine is idling, electric power is generated by the first rotary machine operating as a generator so that the turbine efficiency of the turbocharger which drives the first rotary machine will be optimized, and a battery is charged by electric power generated by the second rotary machine.

Still another object of the present invention is to provide a thermal energy recovery apparatus of the type described, wherein when the motor vehicle is subjected to engine braking, the battery is charged by electric power generated by the first, second, and third rotary machine which operate as generators.

Yet still another object of the present invention is to provide a thermal energy recovery apparatus wherein when the engine undergoes a medium load, the first rotary machine operating as a motor is driven by electric power from the battery according to a boost pressure for thereby increasing a supercharging pressure.

A further object of the present invention is to provide a thermal energy recovery apparatus wherein when the engine is rotated at a low speed under a high load, the first rotary machine operating as a motor is driven by electric power from the battery according to a boost pressure for thereby increasing a supercharging pressure, and the third rotary machine is driven as a motor by electric power generated by the second rotary machine.

A still further object of the present invention is to provide a thermal energy recovery apparatus wherein when the engine is subjected to a low load, the third rotary machine is driven by electric power which is generated by the first and second rotary machines operating as generators such that the efficiency of the turbines which drive the first and second rotary machines will be optimised.

According to the present invention, there is provided apparatus for recovering thermal energy from an engine mounted on a motor vehicle, comprising: a first rotary electric machine coupled to a rotatable shaft of a turbocharger mounted on the engine; a second rotary electric machine in the form of a generator mounted on a rotatable shaft of an exhaust turbine disposed in an exhaust system of the engine; a third rotary electric

machine mounted on an axle of the vehicle, means for detecting the rotational speed of the engine; means for detecting the load on the engine; means for detecting the temperature, at a turbine inlet, of exhaust gases introduced into the turbocharger; means for detecting the pressure, at the turbine inlet, of exhaust gases introduced into the turbocharger; means for detecting the temperature, at a turbine outlet of exhaust gases exiting the turbocharger; means for detecting the pressure, at the turbine outlet, of exhaust gases exiting the turbocharger; means for detecting the rotational speed of the turbocharger; means for detecting the temperature, at the turbine inlet, of exhaust gases introduced into the exhaust turbine; means for detecting the pressure, at the turbine inlet, of exhaust gases introduced into the exhaust turbine; means for detecting the temperature, at the turbine outlet of exhaust gases exiting the exhaust turbine; means for detecting the pressure, at the turbine outlet, of exhaust gases exiting the exhaust turbine; means for detecting the rotational speed of the exhaust turbine; and, a controller for operating the first rotary electric machine as a generator or as a motor and for controlling the generator to generate electric energy and for controlling the third rotary electric machine as a generator or as a motor based on detected signals from the detecting means; characterised by: means for calculating the adiabatic expansion rate of exhaust gases passing through the turbine of the turbocharger based on detected signals from the detecting means; means for calculating the adiabatic expansion rate of exhaust gases passing through the exhaust turbine based on detected signals from the detecting means; and, means for controlling the load on the first rotary electric machine and/or the second electric machine when it operates as a generator and the third rotary electric operates as a motor with the electric energy generated by the first rotary electric machine and/or the second rotary electric machine so that the rotational speed of the turbine of the turbocharger and the rotational speed of the exhaust turbine have a value substantially equal to 0.7 times the calculated adiabatic expansion rate.

The above and other objects, features and advantages of the present invention will become more apparent from the following description when taken in conjunction with the accompanying drawings in which a preferred embodiment of the present invention is shown by way of illustrative example.

Fig. 1 is a schematic view, partly in block form, of an apparatus for recovering thermal energy from an engine according to the present invention;

Figs. 2(a) through 2(d) are a flowchart of an operation sequence of the apparatus of the invention;

Fig. 3 is a flowchart of a control sequence for an optimum turbine efficiency; and,

Fig. 4 is a graph showing the relationship between rotational speeds of the engine and loads on the engine.

As shown in Fig. 1, an internal combustion engine 1 has a thermally insulated construction with main components of combustion chambers and an exhaust system being made of a thermally insulating material. A turbocharger 4 is mounted on the engine 1 for being operated by the energy of an exhaust gas from the engine 1. The turbocharger 4 has a turbine coupled to an exhaust pipe 3 of the engine 1 and a compressor coupled to an intake pipe 2 of the engine 1. The turbine has turbine blades 4a and the compressor has compressor blades 4b. The turbine blades 4a and the compressor blades 4b are interconnected by a rotatable shaft 41 on which there is mounted a first rotary machine 5 that selectively operates as a generator or a motor. The first rotary machine 5 operates as a generator to produce AC electric power when the turbine blades 4a are driven by the energy of the exhaust gas discharged from the exhaust pipe 3. When prescribed AC electric power is supplied, the first rotary machine 5 operates as a motor to drive the rotatable shaft 41 and hence the compressor blades 4b, thus assisting the turbocharger 4 in supercharging the engine.

An exhaust turbine 6 is coupled to an exhaust outlet 4c of the turbocharger 4 and has turbine blades 6a which can be driven by an exhaust gas G having residual energy discharged from the turbocharger 4. The turbine blades 6a of the exhaust turbine 6 are coupled to a rotatable shaft 61 on which a second rotary machine 7 serving as a generator is mounted. Therefore, the second rotary machine 7 generates AC electric power when the turbine blades 6a are driven by the energy of the exhaust gas G.

Denoted at 1a is an engine rotation sensor for detecting the rotational speed of the engine 1, 2a a boost sensor disposed on the intake pipe 2 for detecting a boost pressure P, 4d an exhaust pressure sensor disposed at an inlet of the turbocharger 4 for detecting an exhaust gas pressure, and 6b an exhaust pressure sensor for detecting the pressure of the exhaust gas G introduced into the exhaust turbine 6. Signals detected by these sensors are applied to a controller 10, described later.

Two drive wheels 80 are mounted respectively on drive axles 8 which are driven by the engine 1. Third rotary machines 9 that selectively operate as generators or motors are mounted on the drive axles 8, respectively, and have rotatable shafts directly coupled to the drive axles 8, respectively. The AC output from the first rotary machine 5 operating as the generator and the AC output from the second rotary machine 7 are supplied to the controller 10 and converted thereby to prescribed AC electric power. When such converted AC electric power is supplied from the controller 10 to the third rotary machines 9, they operate as motors to rotate the drive axles 8 for thereby driving the drive wheels 80. When the motor vehicle is braked, the third rotary machines 9 operate as generators to convert the braking force to AC electric energy which is delivered to the controller

10.

The controller 10 comprises a microcomputer having an input/output interface composed of a converter for converting AC frequencies, an inverter for converting DC to AC, and a rectifier for converting AC to DC. The controller 10 is supplied with various control signals including, in addition to the signals from the engine rotation sensor 1a, the boost sensor 2b, and the exhaust pressure sensors 4d, 6b, detected signals from an accelerator sensor 1b which detects the depth to which an accelerator pedal is depressed, a clutch sensor 1c for detecting the extent to which a clutch is engaged, and a gear sensor 1d for detecting a gear position of a gear transmission.

A battery 11 is coupled to the controller 10 via an integrator 11a which integrates a current flowing into the battery 11 to calculate the stored electric power. A signal indicative of the charged electricity is fed to the controller 10 at all times.

Operation of the apparatus thus constructed will be described below.

FIGS. 2(a) through 2(d) show a processing flowchart of operation of the apparatus. The controller 10 ascertains in a step 1 (FIG. 2(a)) whether the engine rotational speed R is lower than 800 rpm or not based on the engine rotation signal from the engine rotation sensor 1a. If the engine rotational speed R is lower than 800 rpm, then control goes to a step 2. If the signal from the clutch sensor 1c is ON, i.e., the clutch is connected, in the step 2, and also if the gear signal from the gear sensor 1d is OFF indicating a neutral gear position in a step 3, then control proceeds to a step 4. The above conditions in the steps 1 through 3 represent that the engine is idling. The step 4 controls the turbocharger 4 for an optimum efficiency according to a control sequence shown in FIG. 3. The first rotary machine 5 on the turbocharger 4 operates as the generator, and the second rotary machine 7 on the exhaust turbine 6 generates electric power in a step 5. Generated AC electric power from the first and second rotary machines 5, 7 is supplied to the controller 10 which then converts the AC electric power to DC electric power with its rectifier. The battery 11 is then charged by the controller 10 through the integrator 11a in a step 6.

The optimum control of the turbine will be described with reference to FIG. 3.

It is assumed that the temperature at the inlet of the turbine is $T_I$, the pressure at the turbine inlet is $P_I$, the temperature at the turbine outlet is $T_o$, the pressure at the turbine outlet is $P_o$, the rotational speed of the turbine per minute is U, the volumetric flow rate by the turbine is V, and a gas constant is R. The gas flow speed C1 can be calculated by the following equations (1) and (2) in steps a, b, c:

$$\frac{NV}{2x60}\eta\frac{P_I}{RT_I}=AC.C_1\gamma=AC.C_1.\frac{P_o}{RT_o} \quad (1)$$

$$C_1=\frac{NV}{120}\eta.\frac{T_oP_I}{T_IP_o}\times\frac{1}{AC} \quad (2)$$

In a step d, the inlet shut-up temperature Tz* is calculated by the following equation (3):

$$Tz^*-Tz+\frac{AC_1^2}{C_p2g} \quad \ldots(3)$$

where Cp is an average specific heat at constant pressure, and $AC_1^2/2g$ is the kinetic energy at the nozzle outlet.

An adiabatic expansion rate Cad is calculated in a step e by the following equation (4):

$$Cad-91.5[C_pTz^*(1-(\frac{T_o}{Tz})^{\frac{1}{\frac{h_2}{h_2-1}\frac{k-1}{k}}}).(1-\rho)]^{\frac{1}{2}} \quad \ldots(4)$$

The turbine speed U is calculated from a signal from a speed sensor on the turbine in a step f. If the speed U is larger than 0.7 Cad in a step g, then the load on the generator on the turbine shaft is increased in a step h.

If the speed U is equal to 0.7 Cad in a step i, then control proceeds from the step i to a step j in which the optimum condition is kept for a time Δt. If the speed U is not equal to 0.7 Cad in the step i, then the load on the generator is reduced in a step k. Thereafter, control goes back to the step a and repeats the control sequence.

Various numerical values such as the temperatures and pressures of the turbochargers 4 and the exhaust turbine 6, together with various constants, are stored in the controller 10 in various stages of operation of the turbine.

If the engine rotational speed R is higher than 800 rpm in the step 1 in FIG. 2(a), or if the clutch signal is ON in the step 2, or if the gear signal is OFF indicating the gear position is other than the neutral position in the step 3, then control goes to a step 7. If the signal from the accelerator sensor 1b is OFF indicating that the accelerator pedal is not depressed in the step 7, then engine braking is indicated, and the first rotary machine 5 is operated as the generator to exert a load on the exhaust pressure from the engine 1 and the load on the second rotary machine 7 is increased in a step 8, thus increasing the engine braking force. The battery 11 is charged through the controller 10 in steps 9 and 10. The third rotary machines 9 on the drive axles 8 are operated as the generators in a step 11 to generate AC electric power for converting the motor vehicle braking force to electric energy. Then, the battery 11 is charged through the controller 10 for energy recovery in the steps 9 and 10.

If the signal from the accelerator sensor 1b is ON indicating depression of the accelerator pedal in the step 7, then control proceeds to a step 12 in FIG. 2(b). If the extent L of depression of the accelerator pedal is smaller than L2 (FIG. 4) in the step 12, and if the extent L of depression of the accelerator pedal is larger than L3 in a step 13, then the accelerator position and the engine rotational speed at this time are detected by the respective sensors in a step 14. The boost pressure P2 for the engine 1 is determined in a step 15. If a signal P of the boost pressure from the boost sensor 2a is smaller than P2 in a step 16, then the first rotary machine 5 on the turbocharger 4 is operated as the motor, and electric power from the battery 11 is converted by the inverter in the controller 10 to AC electric power having a prescribed frequency, which is supplied to drive the compressor blades 4b for supplying supercharged air to the engine 1 to increase its response, in a step 17. If the boost pressure signal P is larger than P2, then the electric power supplied to the first rotary machine 5 then operating as the motor is reduced in a step 18. If the boost pressure signal P is equal to P2 in a step 19, then that condition is kept for the time $\Delta t$ in a step 20.

If the accelerator pedal is sufficiently depressed ($L > L2$) in the step 12, indicating that the load on the engine is larger, and if the engine rotational speed N is lower than a prescribed speed N1 in a step 21, then the accelerator position is detectd in a step 22 and electric power for the first rotary machine 5 operating as the motor is determined in a step 23. The electric power from the battery 11 is supplied through the controller 10 to the first rotary machine 5 for thereby increasing the boost pressure to increase the engine power output. The boost pressure is detected from the signal from the boost sensor 2a in a step 24. If the detected boost pressure is lower than a prescribed boost pressure P1 in a step 25, then the electric power supplied to the first rotary machine 5 is increased in a step 26.

If the boost pressure P is equal to or higher than P1 in the step 25, then the exhaust turbine 6 is controlled for optimum efficiency in a step 27 in the manner similar to the optimum turbine control as shown in FIG. 3. The second rotary machine 7 is driven as the generator to produce electric power that is supplied to the controller 10. The supplied electric power is frequency-converted by the controller 10 to supply suitable AC electric power to the third rotary machines 9 for driving them as the motors in a step 28.

If the accelerator position L is smaller than L3 in the step 13, then control goes to a step 29 in FIG. 2(c). If the accelerator position L is larger than L1 (FIG. 4), then the exhaust pressure PE at the inlet of the turbocharger 4 is measured, and the turbocharger 4 is controlled in the same manner as the aforesaid optimum turbine control in a step 30. If the exhaust pressure PE is higher than a pressure which is the sum of PE1 and $\Delta$ PA in a step 31, then the output from the first rotary machine 5 is reduced by $\Delta W$ to reduce the load in a step 32. When the exhaust pressure PE is thereby made equal to or smaller than (PE1 + $\Delta$PA), control goes to a step 33 in which the exhaust pressure PE′ from the exhaust pressure sensor 6b is measured. The exhaust turbine 6 is controlled in a step 34 in the same manner as the foregoing optimum turbine control. If the exhaust pressure PE′ is higher than a prescribed exhaust pressure PE2 in a step 35, then the output from the second rotary machine 7 then operating as the generator is reduced by $\Delta W1$ in a step 36, thereby lowering the exhaust pressure PE′.

In a next step 37, the output from the first rotary machine 5 as the generator and the output from the second rotary machine 7 as the generator are delivered to the controller 10. The supplied electric power is frequency-converted by the converter in the controller 10 in a step 38, and the converted electric power is supplied to the third rotary machines 9 to operate them as the motors in a step 39 for driving the wheels 80. In the routine from the steps 30 to 39, as described above, the load on the engine 1 is relatively small in general driving conditions, requiring the turbocharger, and the exhaust gas pressure is converted by the first and second rotary machines 5, 7 to electric power that is employed to drive the wheels 80.

If the accelerator position L is smaller than L1 (FIG. 4) in the step 29, then control goes to a step 40 in which the signal P from the boost sensor 2b is measured. If the signal P is smaller than a prescribed boost pressure Po in a step 41, then control goes to a step 42 in which the first, second, and third rotary machines 5, 7, 9 are held idling. If the boost pressure P is higher than Po in the step 41, then the turbocharger 4 is controlled for optimum conditions in the same manner as the aforesaid optimum turbine control. If the boost pressure P is lower than Po in a step 44, then the output from the first rotary machine 5 as the generator is reduced

by ΔW in a step 45. Thereafter, control returns from the step 45 to the step 44. If the boost pressure P is higher than Po in the step 44, then the exhaust turbine 6 is controlled for optimum conditions in the same manner as the aforesaid optimum turbine control in a step 46 (FIG. 2(d)).

If the boost pressure P is lower than Po in a step 47, then the electric power generated by the second rotary machine 7 is reduced to the extent which does not lower the thermal efficiency of the boost pressure in a step 48. Then, the AC output from the first rotary machine 5 and the AC output from the second rotary machine 7 are supplied to the controller 10 and converted by the converter therein. The converted electric energy is then applied to the third rotary machine 9 to drive the wheels 80 in a step 49.

If the boost pressure P is higher than Po in the step 47, then the output from the first rotary machine 5 and the output from the second rotary machine 7 are delivered to the controller 10, which rectifies the supplied electric power and charges the battery 11 in a step 50. If a step 51 determines that the stored electric power C in the battery 11 is sufficient based on the signal from the integrator 11a, then the DC electric power from the battery 11 is applied to the controller 10 and converted thereby to AC electric power. The output from the first rotary machine 5 and the output from the second rotary machine 7 are added and supplied to the third rotary machines 9, which are operated as the motors to drive the wheels 80 in a step 52.

If the stored electric power C in the battery 11 is lower than a prescribed level C1 in the step 51, then control proceeds to a step 53 in which the AC electric power from the first and second rotary machines 5, 7 is supplied through the controller 10 to the third rotary machines 9 for driving the wheels 80 in steps 53, 54.

## Claims

1. Apparatus for recovering thermal energy from an engine (1) mounted on a motor vehicle, comprising:

a first rotary electric machine (5) coupled to a rotatable shaft (41) of a turbocharger (4) mounted on the engine (1);

a second rotary electric machine in the form of a generator ( 7 ) mounted on a rotatable shaft (61) of an exhaust turbine (6) disposed in an exhaust system of the engine (1);

a third rotary electric machine (9) mounted on an axle of the vehicle;

means (1a) for detecting the rotational speed of the engine;

means (1b) for detecting the load on the engine;

means for detecting the temperature ($T_I$), at a turbine inlet, of exhaust gases introduced into the turbocharger (4);

means (4d) for detecting the pressure ($P_I$), at the turbine inlet, of exhaust gases introduced into the turbocharger (4);

means for detecting the temperature ($T_o$), at a turbine outlet of exhaust gases exiting the turbocharger (4);

means for detecting the pressure ($P_o$), at the turbine outlet, of exhaust gases exiting the turbocharger (4);

means for detecting the rotational speed (U) of the turbocharger (4);

means for detecting the temperature ($T_I$), at the turbine inlet, of exhaust gases introduced into the exhaust turbine (6);

means for detecting the pressure ($P_I$), at the turbine inlet, of exhaust gases introduced into the exhaust turbine (6);

means for detecting the temperature ($T_o$), at the turbine outlet of exhaust gases exiting the exhaust turbine (6);

means (6b) for detecting the pressure ($P_o$), at the turbine outlet, of exhaust gases exiting the exhaust turbine (4);

means for detecting the rotational speed (U) of the exhaust turbine (6); and,

a controller (10) for operating the first rotary electric machine (5) as a generator or as a motor and for controlling the generator (7) to generate electric energy and for controlling the third rotary electric machine (9) as a generator or as a motor based on detected signals from the detecting means; characterised by:

means (10) for calculating the adiabatic expansion rate (Cad) of exhaust gases passing through the turbine of the turbocharger (4) based on detected signals from the detecting means;

means (10) for calculating the adiabatic expansion rate (Cad) of exhaust gases passing through the exhaust turbine (6) based on detected signals from the detecting means; and,

means for controlling the load on the first rotary electric machine and/or the second electric machine (7) when it operates as a generator and the third rotary electric (9) operates as a motor with the electric energy generated by the first rotary electric machine (5) and/or the second rotary electric machine (7) so that the

rotational speed (U) of the turbine of the turbocharger (4) and the rotational speed (U) of the exhaust turbine have a value substantially equal to 0.7 times the calculated adiabatic expansion rate (Cad).

## Patentansprüche

1. Vorrichtung zum Zurückgewinnen thermischer Energie von einem Motor (1), der in ein Kraftfahrzeug eingebaut ist, mit:

einer ersten rotierenden elektrischen Maschine (5), die mit einer rotierenden Welle (41) eines an dem Motor (1) angebrachten Turboladers (4) verbunden ist;

einer zweiten rotierenden elektrischen Maschine in Form eines Generators (7), der an einer rotierenden Welle (61) einer an dem Auspuffsystem des Motors (4) angeordneten Abgasturbine (6) angebracht ist;

einer dritten rotierenden elektrischen Maschine (9), die an einer Achse des Fahrzeugs angebracht ist;

Mitteln (1a) zur Messung der Drehgeschwindigkeit des Motors;

Mitteln (1b) zur Messung der Motorlast;

Mitteln zur Messung der Temperatur ($T_I$) von in den Turbolader (4) eingeleiteten Abgasen an einem Turbineneingang;

Mitteln (4d) zur Messung des Druckes ($P_I$) von in den Turbolader (4) eingeleiteten Abgasen an dem Turbineneingang;

Mitteln zur Messung der Temperatur ($T_O$) von aus dem Turbolader (4) ausströmenden Abgasen an einem Turbinenausgang;

Mitteln zur Messung des Druckes ($P_O$) von aus dem Turbolader (4) ausströmenden Abgasen an dem Turbinenausgang;

Mitteln zur Messung der Drehgeschwindigkeit (U) des Turboladers (4);

Mitteln zur Messung der Temperatur ($T_I$) von in die Abgasturbine (6) eingelassenen Abgasen an dem Turbineneingang;

Mitteln zur Messung des Druckes ($P_I$) von in die Abgasturbine (6) eingelassenen Abgasen an dem Turbineneingang;

Mitteln zur Messung der Temperatur ($T_O$) von aus der Abgasturbine (6) ausströmenden Abgasen an dem Turbinenausgang;

Mitteln (6b) zur Messung des Druckes ($P_O$) von aus der Abgasturbine (6) ausströmenden Abgasen an dem Turbinenausgang;

Mitteln zur Messung der Drehgeschwindigkeit (U) der Abgasturbine (6); und

einem Regler (10) zum Betreiben der ersten rotierenden elektrischen Maschine (5) als Generator oder als Motor und zur Regelung des Generators (7), um elektrische Energie zu erzeugen, und zur Regelung der dritten rotierenden elektrischen Maschine (9) als Generator oder als Motor in Abhängigkeit von den festgestellten Signalen der Meßmittel;

**gekennzeichnet** durch:

Mittel (10) zur Berechnung des adiabatischen Expansionswertes (Cad) von Abgasen, die durch die Turbine des Turboladers (4) hindurchströmen, auf der Grundlage von festgestellten Signalen von den Meßmitteln;

Mittel (10) zur Berechnung des adaibatischen Expansionswertes (Cad) von Abgasen, die durch die Abgasturbine (6) hindurchströmen, auf der Grundlage von festgestellten Signalen von den Meßmitteln; und

Mittel zur Berechnung der Last an der ersten rotierenden elektrischen Maschine und/oder der zweiten elektrischen Maschine (7), wenn sie als Generator arbeitet und die dritte rotierende elektrische Maschine (9) als Motor mit der elektrischen Energie arbeitet, die durch die erste rotierende elektrische Maschine (5) und/oder die zweite rotierende elektrische Maschine (7) erzeugt wird, so daß die Drehgeschwindigkeit (U) der Turbine des Turboladers (4) und die Drehgeschwindigkeit (U) der Abgasturbine einen Wert aufweisen, der im wesentlichen dem 0,7-fachen des berechneten adiabatischen Expansionswertes (Cad) entspricht.

## Revendications

1. Appareil de récupération de l'énergie thermique d'un moteur (1) monté sur un véhicule à moteur, comprenant :

une première machine électrique tournante (5) couplée à un arbre rotatif (41) d'un organe de suralimentation (4) monté sur le moteur (1),

une seconde machine électrique tournante sous forme d'une génératrice (7) montée sur un arbre rotatif (61) d'une turbine d'échappement (6) disposée dans un circuit d'échappement du moteur (1),

une troisième machine électrique tournante (9) montée sur un essieu du véhicule,
un dispositif (1a) de détection de la vitesse de rotation du moteur,
un dispositif (1b) de détection de la charge du moteur,
un dispositif de détection de la température ($T_I$), à l'entrée de la turbine, des gaz d'échappement introduits dans l'organe de suralimentation (4),
un dispositif (4d) de détection de la pression ($P_I$), à l'entrée de la turbine, des gaz d'échappement introduits dans l'organe de suralimentation (4),
un dispositif de détection de la température ($T_o$), à une sortie de la turbine, des gaz d'échappement quittant l'organe de suralimentation (4),
un dispositif de détection de la pression ($P_o$), à la sortie de la turbine, des gaz d'échappement sortant de l'organe de suralimentation (4),
un dispositif de détection de la vitesse de rotation (U) de l'organe de suralimentation (4),
un dispositif de détection de la température ($T_I$), à l'entrée de la turbine, des gaz d'échappement introduits dans la turbine d'échappement (6),
un dispositif de détection de la pression ($P_I$), à l'entrée de la turbine, des gaz d'échappement introduits dans la turbine d'échappement (6),
un dispositif destiné à détecter la température ($T_o$), à la sortie de la turbine, des gaz d'échappement quittant la turbine d'échappement (6),
un dispositif (6b) de détection de la pression ($P_o$), à la sortie de la turbine, des gaz d'échappement quittant la turbine d'échappement (4),
un dispositif de détection de la vitesse de rotation (U) de la turbine d'échappement (6), et
un organe (10) de commande de la première machine électrique tournante (5) en génératrice ou en moteur et de commande de la génératrice (7) afin qu'elle crée de l'énergie électrique, et de commande de la troisième machine électrique tournante (9) en génératrice ou en moteur d'après des signaux détectés par les dispositifs de détection, caractérisé par :
un dispositif (10) de calcul de la vitesse de détente adiabatique (Cad) des gaz d'échappement circulant dans la turbine de l'organe de suralimentation (4) d'après les signaux détectés par les dispositifs de détection,
un dispositif (10) de calcul de la vitesse de détente adiabatique (Cad) des gaz d'échappement circulant dans la turbine d'échappement (6) d'après les signaux détectés par les dispositifs de détection, et
un dispositif de commande de la charge de la première machine électrique tournante (5) et/ou de la seconde machine électrique tournante (7) lorsqu'elles travaillent en génératrices et de la troisième machine électrique tournante (9) lorsqu'elle travaille en moteur avec l'énergie électrique créée par la première machine électrique tournante (5) et/ou la seconde machine électrique tournante (7), afin que la vitesse de rotation (U) de la turbine de l'organe de suralimentation (4) et la vitesse de rotation (U) de la turbine d'échappement aient une valeur sensiblement égale à 0,7 fois la vitesse calculée de détente adiabatique (Cad).

Fig. 1

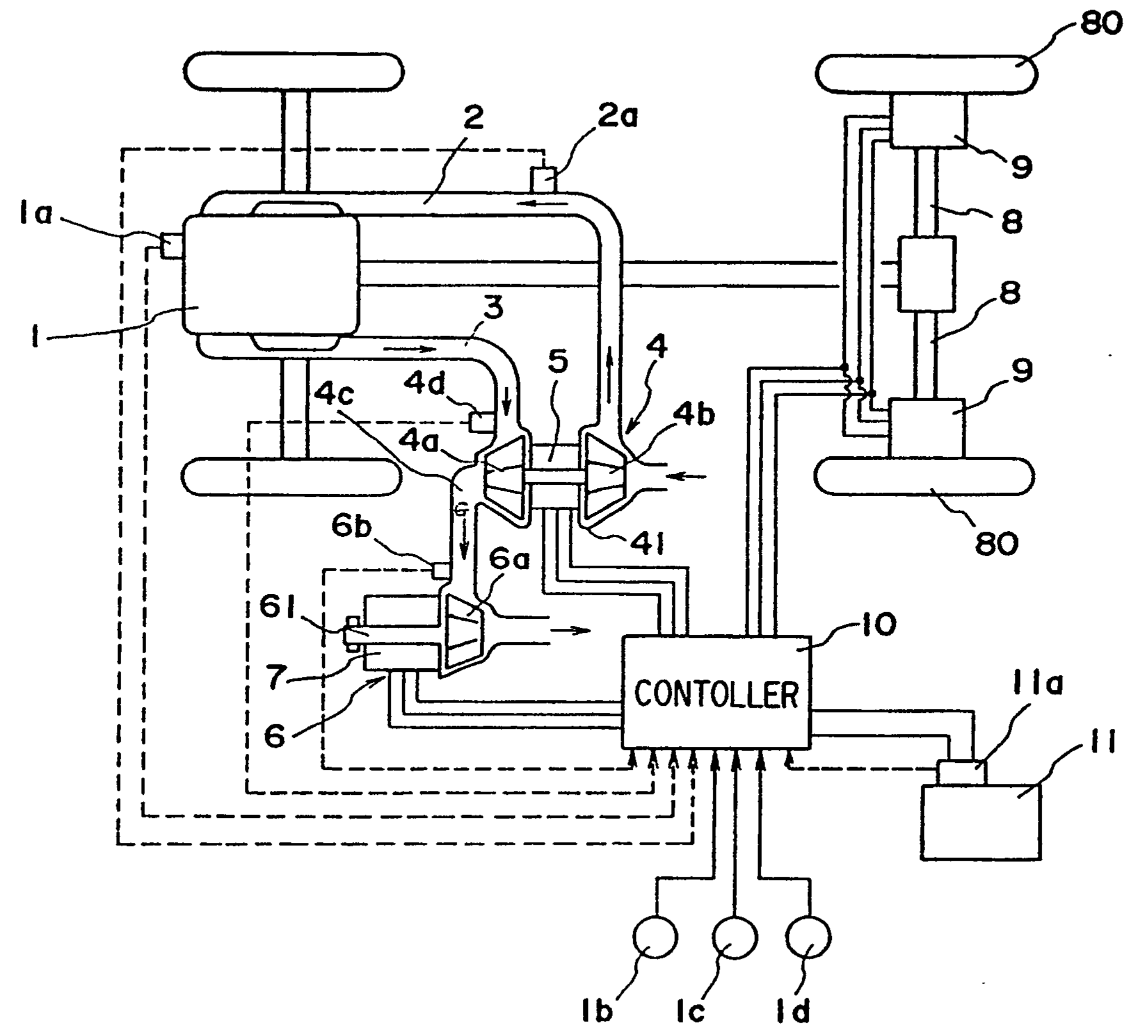
80
2
2a
9
1a
8
8
1
3
5
4
9
4d
4c
4b
4a
6b
6a
41
80
61
10
7
CONTOLLER
11a
6
11
1b
1c
1d

# Fig. 2 (a)

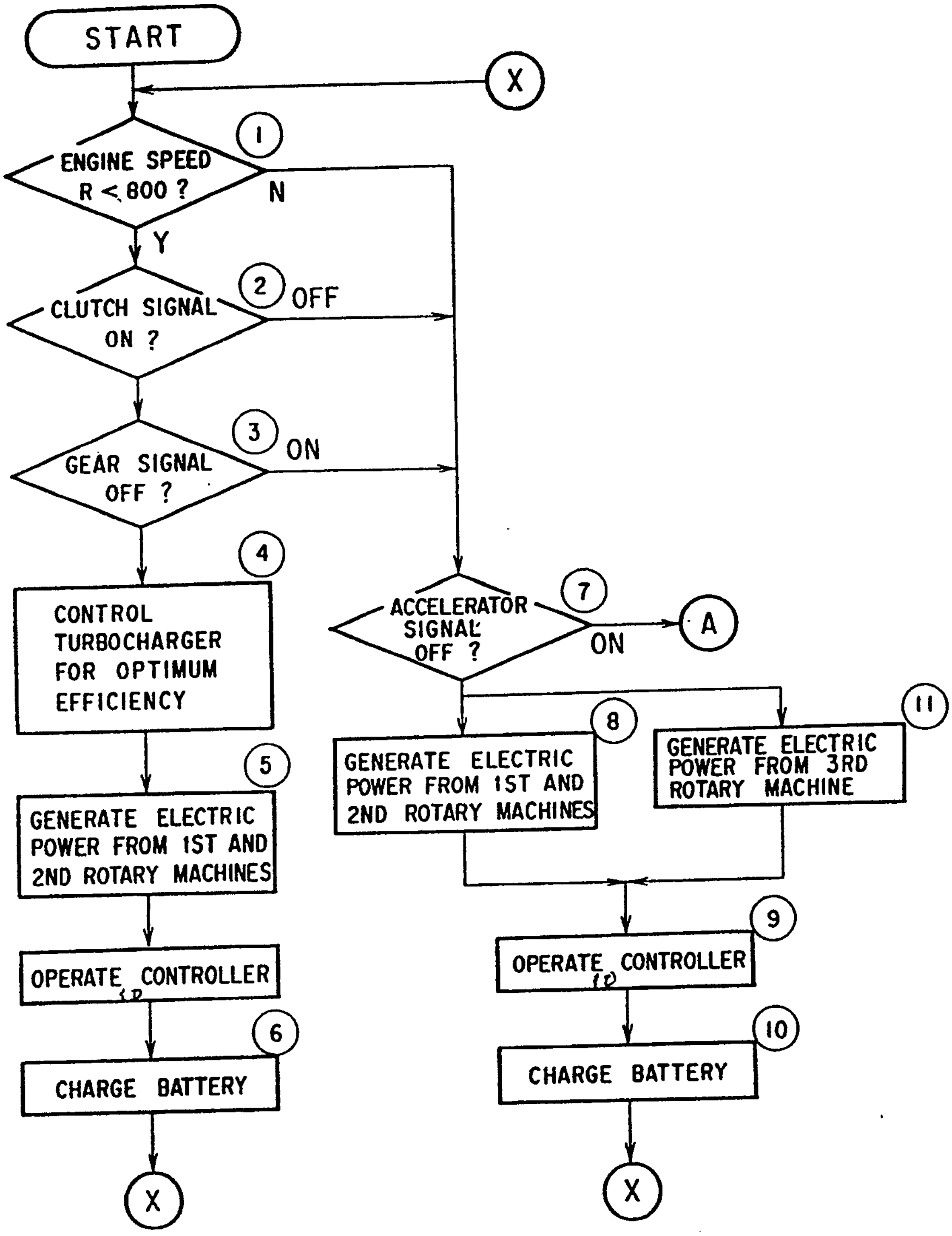
START
X
ENGINE SPEED R < 800 ?
1
N
Y
CLUTCH SIGNAL ON ?
2
OFF
GEAR SIGNAL OFF ?
3
ON
4
CONTROL TURBOCHARGER FOR OPTIMUM EFFICIENCY
ACCELERATOR SIGNAL OFF ?
7
ON
A
5
GENERATE ELECTRIC POWER FROM 1ST AND 2ND ROTARY MACHINES
8
GENERATE ELECTRIC POWER FROM 1ST AND 2ND ROTARY MACHINES
11
GENERATE ELECTRIC POWER FROM 3RD ROTARY MACHINE
OPERATE CONTROLLER
9
OPERATE CONTROLLER
6
CHARGE BATTERY
10
CHARGE BATTERY
X
X

Fig. 2 (b)

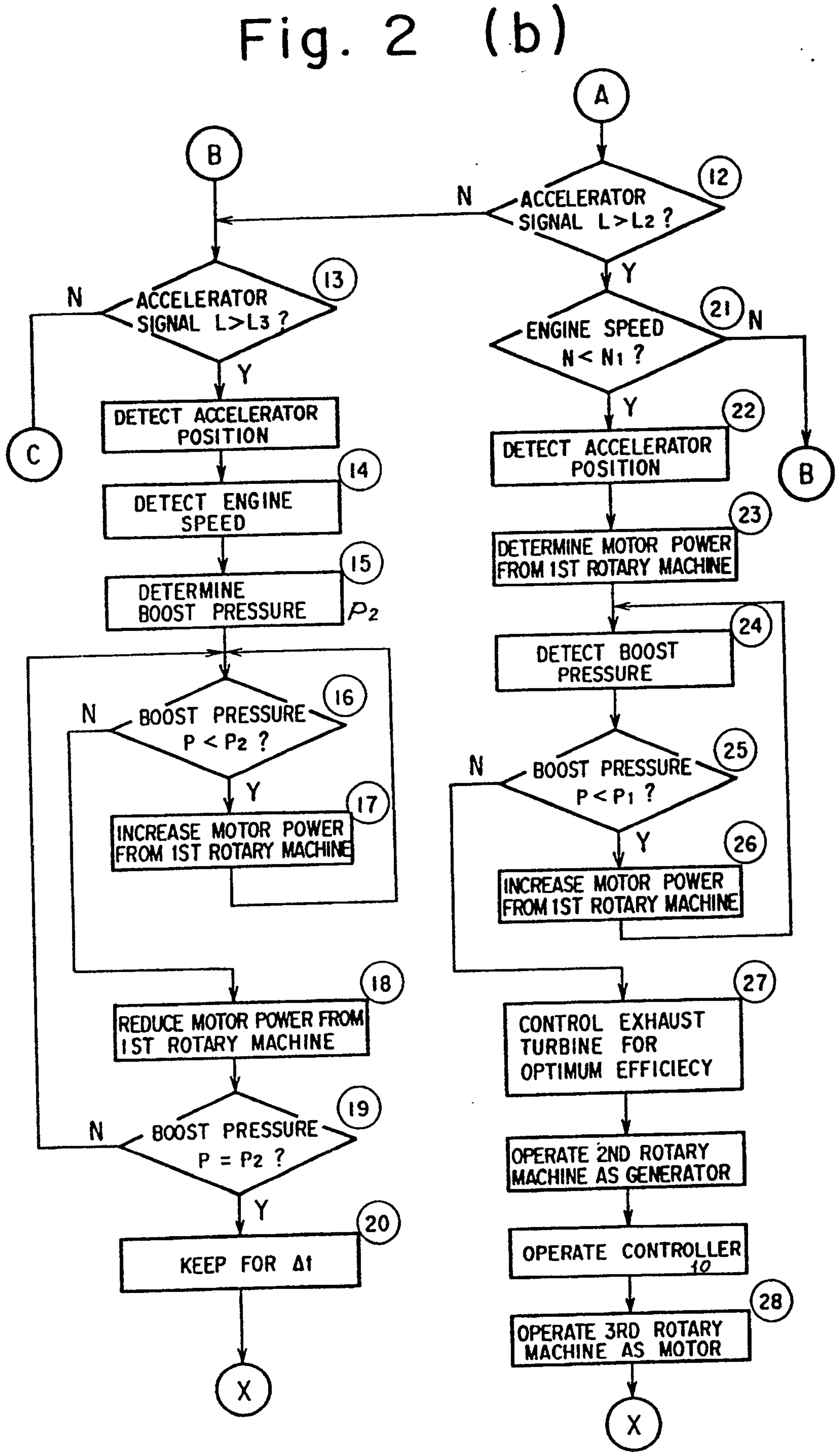
A
B
ACCELERATOR SIGNAL L>L2 ?
12
N
Y
ACCELERATOR SIGNAL L>L3 ?
13
N
Y
C
DETECT ACCELERATOR POSITION
DETECT ENGINE SPEED
14
DETERMINE BOOST PRESSURE
15
P2
BOOST PRESSURE P < P2 ?
16
INCREASE MOTOR POWER FROM 1ST ROTARY MACHINE
17
REDUCE MOTOR POWER FROM 1ST ROTARY MACHINE
18
BOOST PRESSURE P = P2 ?
19
KEEP FOR Δt
20
X
ENGINE SPEED N < N1 ?
21
DETECT ACCELERATOR POSITION
22
DETERMINE MOTOR POWER FROM 1ST ROTARY MACHINE
23
DETECT BOOST PRESSURE
24
BOOST PRESSURE P < P1 ?
25
INCREASE MOTOR POWER FROM 1ST ROTARY MACHINE
26
CONTROL EXHAUST TURBINE FOR OPTIMUM EFFICIECY
27
OPERATE 2ND ROTARY MACHINE AS GENERATOR
OPERATE CONTROLLER
10
OPERATE 3RD ROTARY MACHINE AS MOTOR
28
X

Fig. 2 (c)

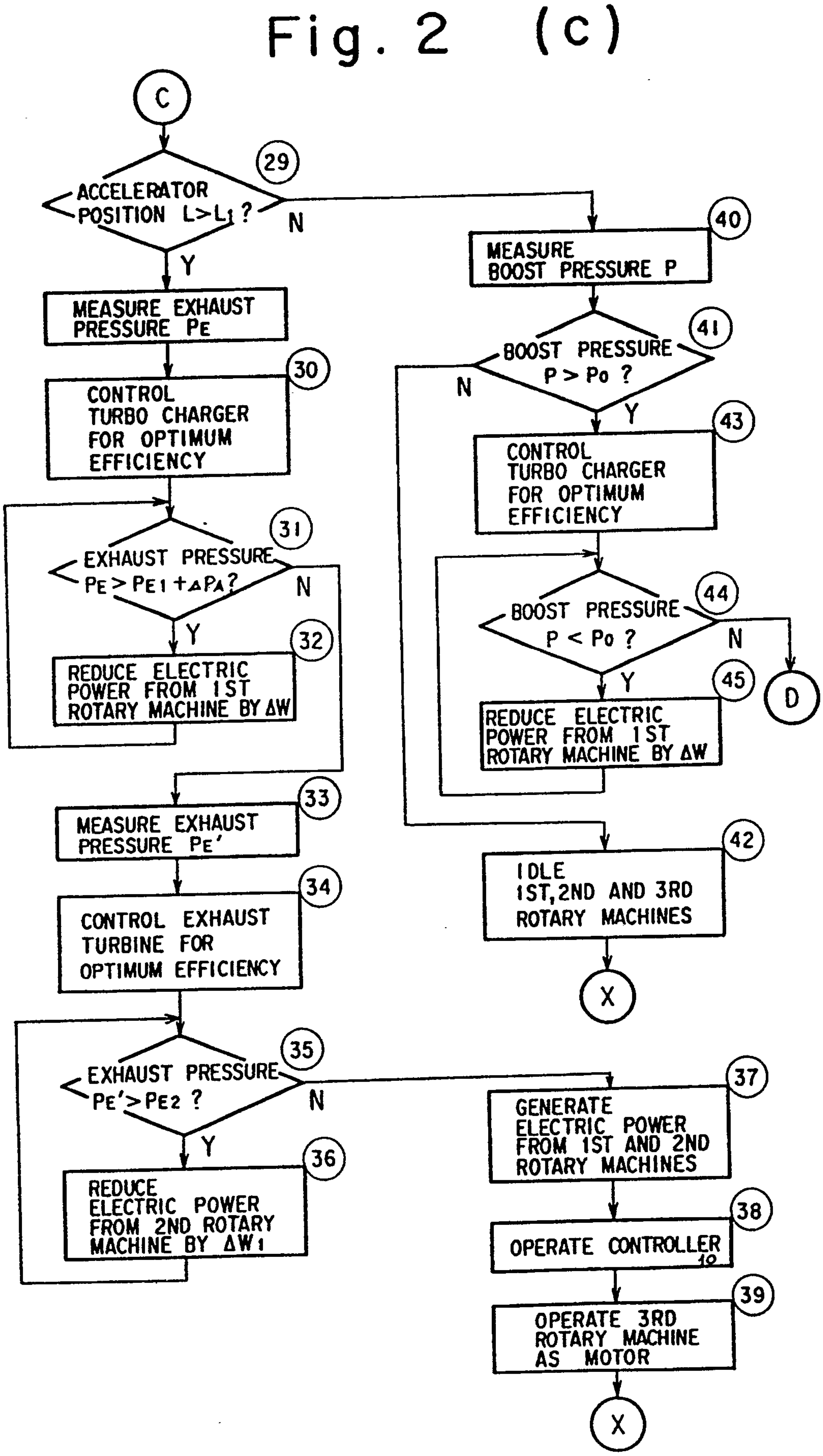
C
ACCELERATOR POSITION L>L1 ?
29
N
Y
MEASURE EXHAUST PRESSURE PE
CONTROL TURBO CHARGER FOR OPTIMUM EFFICIENCY
30
EXHAUST PRESSURE PE > PE1 +ΔPA ?
31
N
Y
REDUCE ELECTRIC POWER FROM 1ST ROTARY MACHINE BY ΔW
32
MEASURE EXHAUST PRESSURE PE'
33
CONTROL EXHAUST TURBINE FOR OPTIMUM EFFICIENCY
34
EXHAUST PRESSURE PE'>PE2 ?
35
N
Y
REDUCE ELECTRIC POWER FROM 2ND ROTARY MACHINE BY ΔW1
36
MEASURE BOOST PRESSURE P
40
BOOST PRESSURE P > Po ?
41
N
Y
CONTROL TURBO CHARGER FOR OPTIMUM EFFICIENCY
43
BOOST PRESSURE P < Po ?
44
N
Y
D
REDUCE ELECTRIC POWER FROM 1ST ROTARY MACHINE BY ΔW
45
IDLE 1ST,2ND AND 3RD ROTARY MACHINES
42
X
GENERATE ELECTRIC POWER FROM 1ST AND 2ND ROTARY MACHINES
37
OPERATE CONTROLLER 10
38
OPERATE 3RD ROTARY MACHINE AS MOTOR
39
X

Fig. 2 (d)

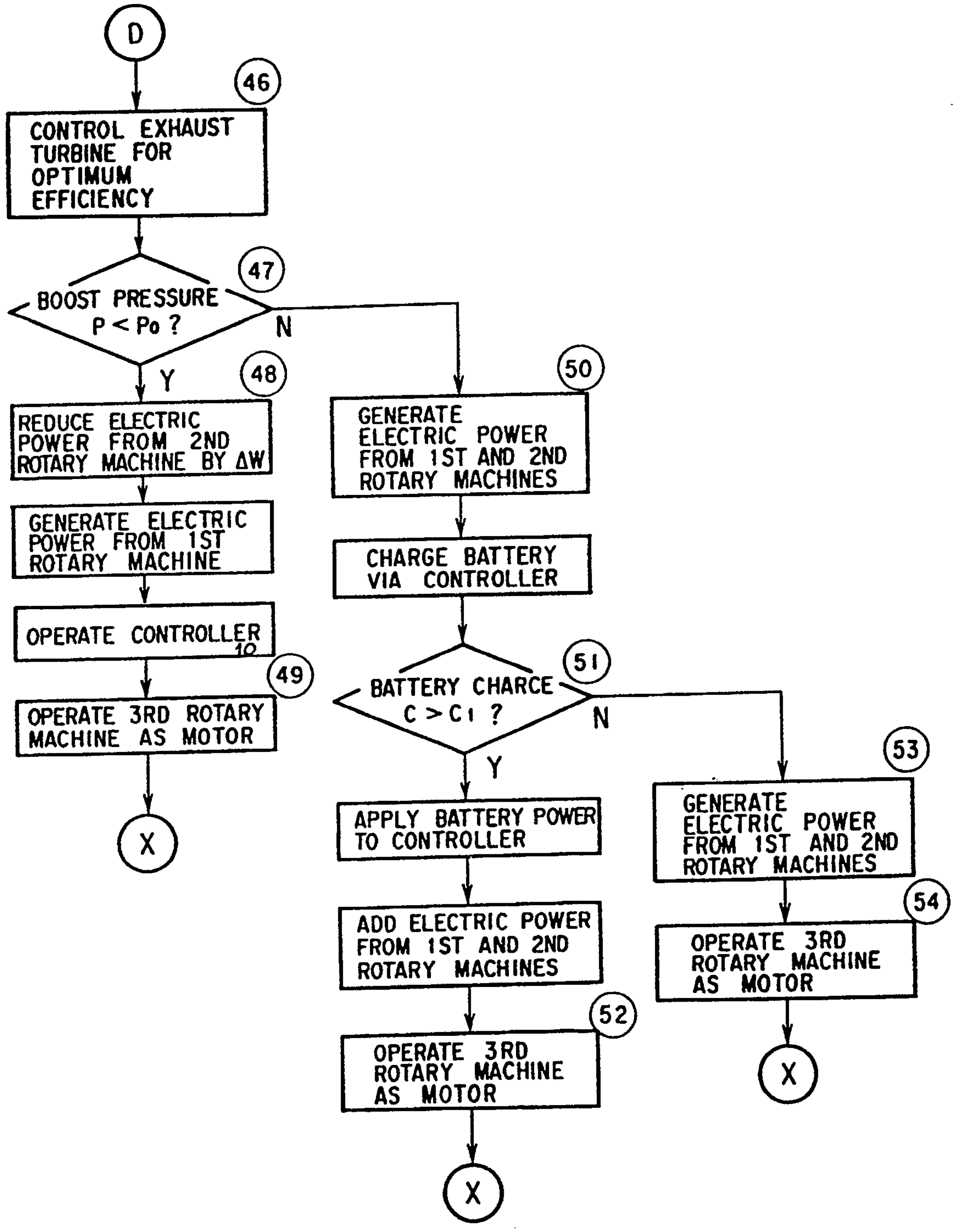
D
46
CONTROL EXHAUST TURBINE FOR OPTIMUM EFFICIENCY
47
BOOST PRESSURE P < Po ?
Y
N
48
REDUCE ELECTRIC POWER FROM 2ND ROTARY MACHINE BY ΔW
GENERATE ELECTRIC POWER FROM 1ST ROTARY MACHINE
OPERATE CONTROLLER 10
49
OPERATE 3RD ROTARY MACHINE AS MOTOR
X
50
GENERATE ELECTRIC POWER FROM 1ST AND 2ND ROTARY MACHINES
CHARGE BATTERY VIA CONTROLLER
51
BATTERY CHARCE C > C1 ?
Y
N
APPLY BATTERY POWER TO CONTROLLER
ADD ELECTRIC POWER FROM 1ST AND 2ND ROTARY MACHINES
52
OPERATE 3RD ROTARY MACHINE AS MOTOR
X
53
GENERATE ELECTRIC POWER FROM 1ST AND 2ND ROTARY MACHINES
54
OPERATE 3RD ROTARY MACHINE AS MOTOR
X

Fig. 3

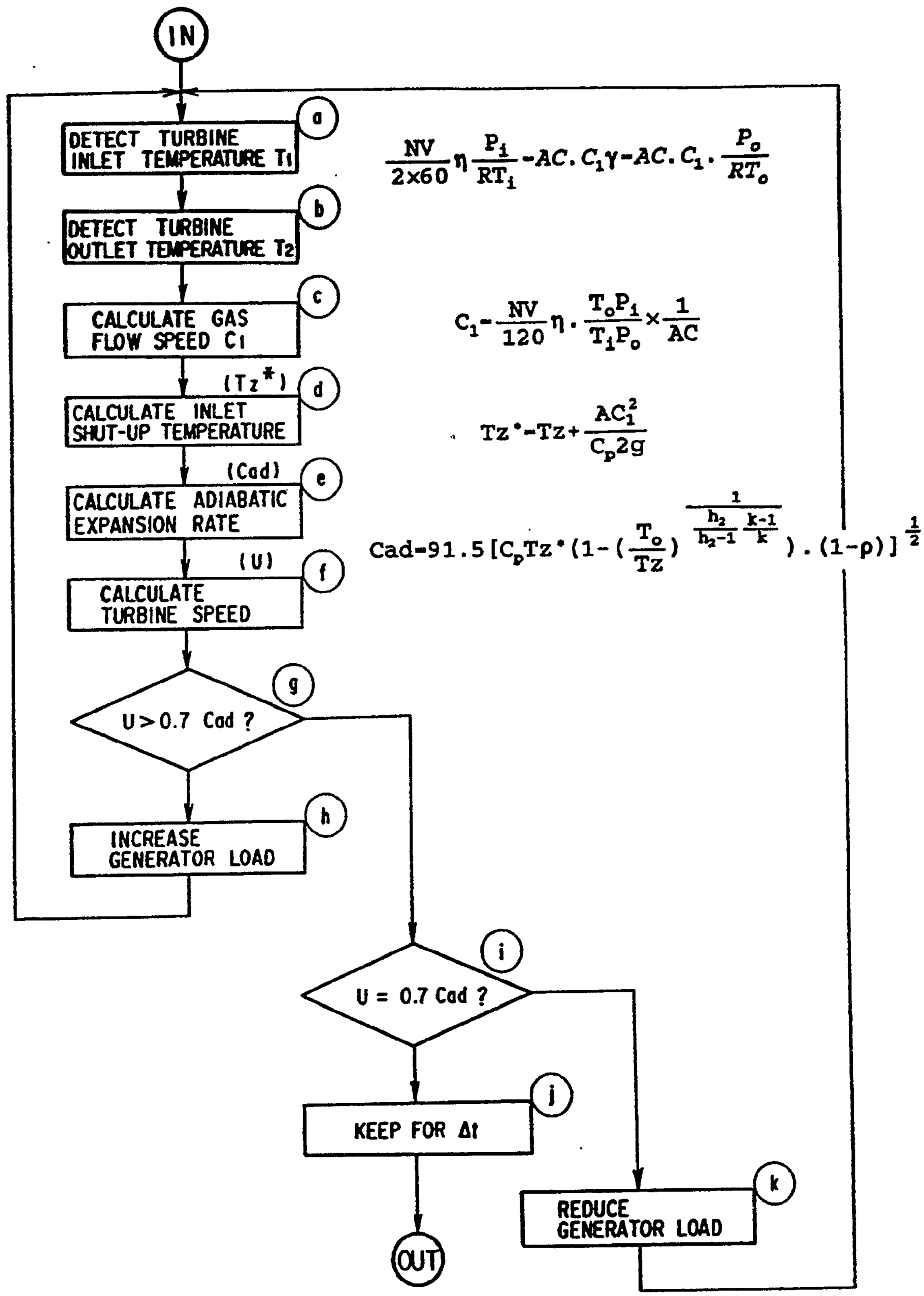
IN
DETECT TURBINE INLET TEMPERATURE T1
a
$\frac{NV}{2\times60}\eta\frac{P_1}{RT_1}=AC.C_1\gamma=AC.C_1.\frac{P_o}{RT_o}$
DETECT TURBINE OUTLET TEMPERATURE T2
b
CALCULATE GAS FLOW SPEED C1
c
$C_1=\frac{NV}{120}\eta\cdot\frac{T_oP_1}{T_1P_o}\times\frac{1}{AC}$
(Tz*)
CALCULATE INLET SHUT-UP TEMPERATURE
d
$Tz^*=Tz+\frac{AC_1^2}{C_p2g}$
(Cad)
CALCULATE ADIABATIC EXPANSION RATE
e
$Cad=91.5[C_pTz^*(1-(\frac{T_o}{Tz})^{\frac{1}{\frac{h_2}{h_2-1}\frac{k-1}{k}}}).(1-\rho)]^{\frac{1}{2}}$
(U)
CALCULATE TURBINE SPEED
f
U > 0.7 Cad ?
g
INCREASE GENERATOR LOAD
h
U = 0.7 Cad ?
i
KEEP FOR Δt
j
REDUCE GENERATOR LOAD
k
OUT

Fig. 4

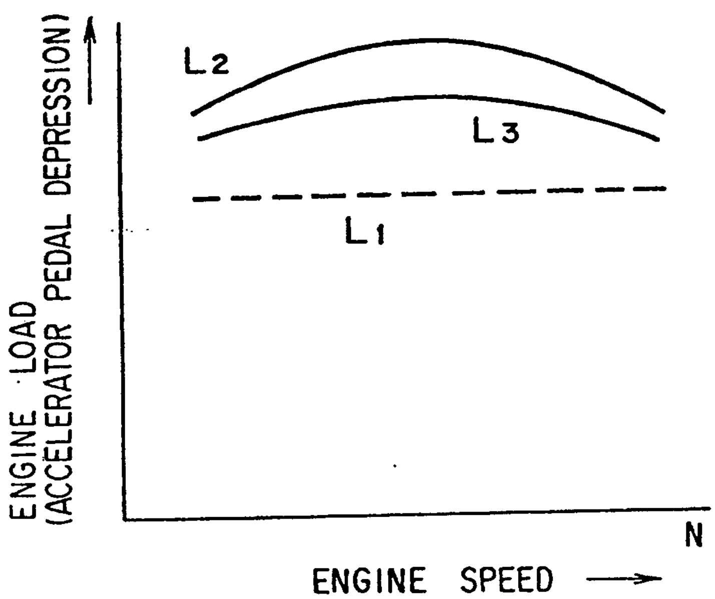
ENGINE LOAD
(ACCELERATOR PEDAL DEPRESSION)
L2
L3
L1
N
ENGINE SPEED